Europäisches Patentamt

European Patent Office

Office européen des brevets

(11) Veröffentlichungsnummer: **0 210 119**
**B1**

# (12) EUROPÄISCHE PATENTSCHRIFT

(45) Veröffentlichungstag der Patentschrift:
03.05.89

(51) Int. Cl.⁴: **F16H 57/04**, F16H 55/17

(21) Anmeldenummer: 86730040.2

(22) Anmeldetag: 06.03.86

(54) Zahnrad für ein Getriebe.

(30) Priorität: 11.05.85  DE 3517042

(43) Veröffentlichungstag der Anmeldung:
28.01.87 Patentblatt 87/5

(45) Bekanntmachung des Hinweises auf die Patenterteilung:
03.05.89 Patentblatt 89/18

(84) Benannte Vertragsstaaten:
AT BE CH DE FR GB IT LI LU NL SE

(56) Entgegenhaltungen:
EP-A- 0 054 852
DE-B- 1 268 446
DE-C- 3 228 780
FR-A- 2 098 779
US-A- 4 327 598

(73) Patentinhaber: MANNESMANN Aktiengesellschaft,
Mannesmannufer 2 Postfach 5501,
D-4000 Düsseldorf 1(DE)

(72) Erfinder: Sadowsky, Günter, Königstrasse 41,
D-5802 Wetter 1(DE)

(74) Vertreter: Meissner, Peter E., Dipl.-Ing. et al, Meissner &
Meissner Patentanwälte Herbertstrasse 22,
D-1000 Berlin 33 Grunewald(DE)

## Beschreibung

Die Erfindung betrifft ein Zahnrad für ein Getriebe nach dem Oberbegriff des Anspruches 1.

Die Schmierung von Zahnradlagerung, insbesondere in Planetengetrieben, wird üblicherweise durch Einbringen von Bohrungen von den Zahnlücken zu den Lagern erreicht. Das Schmiermittel kann dann jedoch nur bei Stillstand oder sehr geringer Drehzehl der Wellen sicher in das Innere der Zahnräder mit ihren Lagern eindringen, da bei planetenartig drehenden Getriebewellen die auf das Schmiermittel wirkende Zentrifugalkraft sehr groß ist.

Aus der US-A 4 327 598, welche die Merkmale nach dem Oberbegriff des Anspruchs 1, der Erfindung zeigt ist ein Getriebe bekannt, dessen Zahnräder sich in einem Gehäuse befinden und in diesem zum Teil in ein Schmiermittel eintauchen. An der Stirnseite eines Zahnrades ist dabei eine entgegen der Drehrichtung gekrümmte, von außen bis zur Zentralbohrung des Zahnrades geführte Nut vorgesehen, d.h. zum Lager geführt werden kann.

Es ist auch ein Ölschmiersystem für Getriebe mit einer Fliehkraftpumpe bekannt, die ein scheibenförmiges Flügelrad mit an der Stirnfläche radialen Kanälen hat. Dies erfordert jedoch den Einbau zusätzlicher Bauteile, die die Konstruktion des Getriebes komplizieren und die Herstellungskosten verteuern.

Der Erfindung liegt die Augabe zugrunde, ein Getriede so zu gestalten, daß das Schmiermittel während des Betriebes ohne zusätzliche Bauteile im Gehäuse ausreichend in das Innere der Zahnräder geleitet wird, wo sich die empfindlichen Lagerstellen befinden.

Diese Aufgabe wird dadurch gelöst, daß die Schmiermittelnut mit einer der Stirnseite des Zahnrades in geringem Abstand gegenüberliegenden, als Begrenzung der Nut dienenden Wand zusammenwirkt, relativ zu der sich das Zahnrad dreht und daß die Krümmung der Schmiermittelnut als eine Spirale mit einem Bogen von ca. 360 Grad ausgebildet ist. Die Nut füllt sich beim Eintauchen in das Ölbad mit Öl und fördert es nach dem Verlassen des Ölbades in den Innenbereich des Zahnrades zu den Lagern. Es hat sich in Versuchen herausgestellt, daß die Zahnräder in Planetengetrieben bei Zahnrad-Drehzahlen zwischen ca. 50 und 200 U/min ausreichend mit Öl versorgt werden.

Eine vorzugsweise Weiterbildung ergibt sich aus dem Anspruch 2.

Die Erfindung wird nachstehend anhand eines Ausführungsbeispiels näher erläutert. Es zeigen

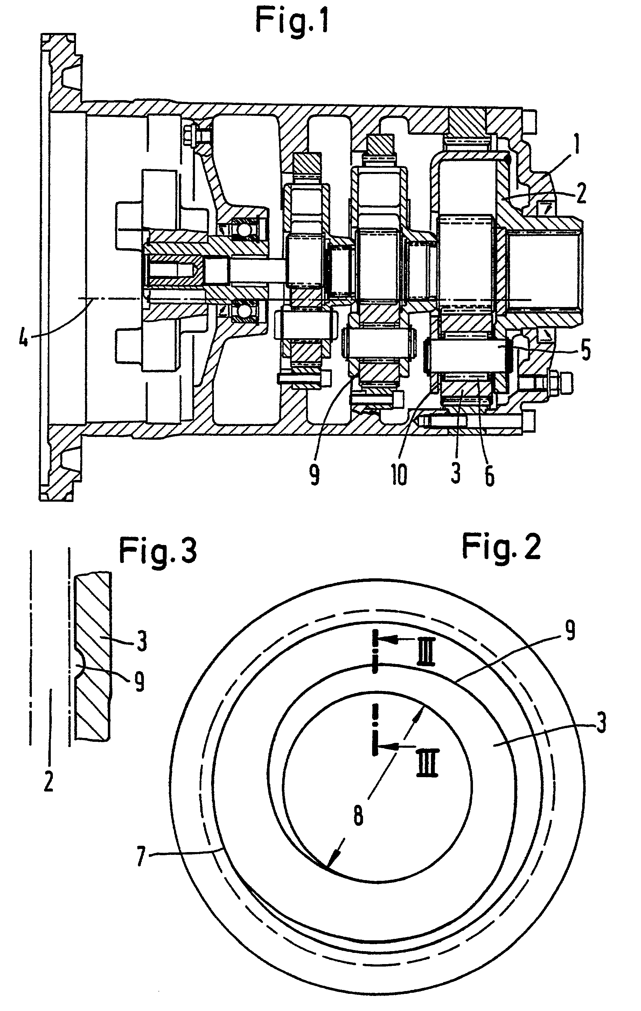

Fig. 1 einen Längsschnitt durch ein teilweise mit Öl gefülltes Gehäuse eines Planetengetriebes,

Fig. 2 ein Planetenrad in der Seitenansicht in größerem Maßstab,

Fig. 3 den Schnitt III–III durch eine Stirnfläche des Planetenrades mit Schmiermittelnut.

In einem Gehäuse 1 ist ein Planetengetriebe angeordnet, dessen Planetenträger 2 und Zahnräder 3 beim Drehen des Getriebes mehr oder weniger tief in ein Ölbad mit einem mit 4 bezeichneten Ölstand eintauchen. Die Planetenträger 2 haben Achsen 5 für die Zahnräder 3 tragende Wälzlager 6, die mit Öl versorgt werden müssen. Hierzu haben die Zahnräder 3 an beiden Stirnflächen als Schmiermittelkanal dienende, vom Fuße des Zahnkranzes 7 zur Zentralbohrung 8 führende Nuten 9. Diese Nuten haben, von der jeweiligen Stirnseite betrachtet, die gleiche Steigungsrichtung. Sie sind tatsächlich entgegengesetzt gerichtet, so daß je nach Drehrichtung des Zahnrades eine der Nuten 9 das Öl zum Lager 6 fördert. Die Nuten 9 sind bei einem Zahnrad von ca. 100 mm Durchmesser ca. 1,5 mm breit und ca. 0,5 mm tief und ohne großen Aufwand herstellbar. Bei größeren Zahnrädern sollten die Nuten größer sein. Der Abstand 10 zwischen dem Zahnrad 3 und seinen Planetenträgern 2 beträgt ca. 0,2 mm, so daß die Wand der Planetenträger als Begrenzung der durch die Nuten 9 gebildeten Schmiermittelkanäle bezeichnet werden kann.

## Patentansprüche

1. Zahnrad für ein Getriebe, dessen Zahnräder sich in einem Gehäuse (1) befinden und in diesem zum Teil in ein Schmiermittel eingetaucht werden, wobei das Getriebe mit einer Schmiermittelfördereinrichtung an dem Zahnrad (3) ausgebildet ist, das eine Zentralbohrung (8) für seine Lagerung aufweist, wobei hierzu an mindestens einer Seite des Zahnrades (3) mindestens eine entgegen der Drehrichtung gekrümmte, von außen bis zum Zentralbohrung (8) geführte Schmiermittelnut (9) vorhanden ist, dadurch gekennzeichnet, daß die Schmiermittelnut (9) mit einer der Stirnseite des Zahnrades in geringem Abstand gegenüberliegenden, als Begrenzung der Nut dienenden Wand zusammenwirkt, relativ zu der sich das Zahnrad dreht und daß die Krümmung der Schmiermittelnut (9) als eine Spirale mit einem Bogen von ca. 360 Grad ausgebildet ist.

2. Zahnrad nach Anspruch 1, dadurch gekennzeichnet, daß die Schmiermittelnut (9) auf beiden Seiten des Zahnrades (3) vorhanden ist und stets von der Betrachtungsseite die gleiche Steigungseinrichtung hat.

## Claims

1. A gear wheel for a set of gears, the gear wheels of which are located in a housing (1) and are partly immersed in a lubricant therein, the set of gears being constructed with a lubricant supply device on the gear wheel (3) which has a central bore (8) for its mounting, and at least one lubricant groove (9) which is curved counter to the direction of rotation and passes from the outside of the central bore (8) on a least one side of the gear wheel (3), characterised in that the lubricant groove (9) cooperates with a wall (2) which lies opposite the front end of the gear wheel at a short distance therefrom and serves to limit the groove, relative to which wall the gear wheel rotates, and in that the lubricant groove (9) is designed as a spiral with an arc of approximately 360 degrees.

2. A geasr whell according to Claim 1, characterised in that a lubricant groove (9) is present on each side of the gear wheel (3) and always has the same direction of pitch from the side viewed.

**Revendications**

1. Roue dentée pour un engrenage, dont les roues dentées se trouvent dans un carter (1) et sont plongées partiellement, dans celui-ci, dans un lubrifiant, l'engrenage présentant und dispositif d'amenée de lubrifiant à la roue dentée (3), qui présente un alésage central (8) pour son montage, au moins une rainure pour lubrifiant (9) s'étendant de l'extérieur jusqu'à l'alésage central (8) en étant courbée à l'encontre du sens de rotation, existant pour cela sur au moins un côté de la roue dentée (3), caractérisée en ce que la rainure pour lubrifiant (9) coopère avec une paroi (2) servant de limitation à la rainure, faisant face, à une faible distance, à la face frontale de la roue dentée, et relativement à laquelle tourne la roue dentée, et en ce que la courbure de la rainure pour lubrifiant (9) forme une spirale sur environ 360°.

2. Roue dentée selon la revendication 1, caractérisée en ce que la rainure pour lubrifiant (9) existe des deux côtés de la roue dentée (3) et a toujours le même sens d'hélice, vue du côté d'observation.

# Fig.1

# Fig.3

# Fig.2